# FASCICULE DE BREVET EUROPEEN

(11) **EP 3 993 996 B1**
(45) Date de publication et mention de la délivrance du brevet: **02.08.2023**
(21) Numéro de dépôt: 20731895.7
(22) Date de dépôt: 16.06.2020
(51) Int. Cl.: B32B 3/12, B32B 3/18, B32B 3/26, B64D 33/02, F02C 7/24, G10K 11/172

(54) **REVÊTEMENT INSONORISANT COMPORTANT UNE STRUCTURE ALVÉOLAIRE**
SCHALLDÄMMENDE BESCHICHTUNG MIT ZELLSTRUKTUR
SOUNDPROOFING COATING COMPRISING A CELLULAR STRUCTURE

(30) Priorité: 05.07.2019 FR 1907509
(43) Date de publication de la demande: 11.05.2022
(73) Titulaire: AIRBUS OPERATIONS (S.A.S.), 31060 Toulouse (FR)
(72) Inventeur: CARIOU, Charles, 31060 TOULOUSE Cedex 9 (FR)
(74) Mandataire: Jardel, Marc Henry Philippe
(86) Numéro de dépôt international: PCT/EP2020/066624
(87) Numéro de publication internationale: WO 2021/004735

(56) Documents cités:
- FR-A1- 3 060 829
- US-A- 3 821 999
- US-A1- 2015 292 413

## Description

La présente invention concerne le domaine des structures d'insonorisation.

Elle porte en particulier sur un revêtement d'insonorisation à structure alvéolaire. Le revêtement objet de l'invention peut avoir des applications, en particulier dans le domaine aéronautique, par exemple dans des nacelles de groupes propulseurs d'aéronef.

### DOMAINE TECHNIQUE

Des revêtements ou panneaux comportant une structure alvéolaire constituée de cellules ou alvéoles, c'est-à-dire de volumes unitaires creux juxtaposés, sont employés dans de nombreux domaines techniques, notamment dans le domaine aéronautique. Ils peuvent présenter une grande rigidité pour une masse faible. Les revêtements comportant une structure alvéolaire ayant des cellules ouvertes sur une face, ou à tout le moins des cellules communiquant avec l'extérieur du panneau sont employés pour leurs propriétés d'insonorisation. De tels panneaux sont parfois appelés panneaux acoustiques.

### TECHNIQUE ANTERIEURE

Les panneaux ou revêtements à structure alvéolaire peuvent être formés en divers matériaux par exemple plastiques, composites, ou métalliques. Les cellules peuvent présenter diverses géométries. Une forme bien connue de structure alvéolaire présente des cellules en forme de prisme droit de base hexagonale. On parle souvent de structure « en nid d'abeilles » pour désigner ce type de structure à cellules hexagonales, mais cette expression est également employée par abus de langage pour désigner des panneaux alvéolaires présentant d'autres formes de cellules.

Ainsi, un panneau ou revêtement acoustique classique comprend généralement un noyau en nid d'abeilles interposé entre une feuille perforée ou comportant un tissu métallique perméable aux ondes acoustiques formant une première face et une feuille de fermeture, généralement pleine, obturant les cellules et formant une deuxième face du revêtement.

Les cellules des panneaux acoustiques agissent comme de petits résonateurs permettant l'absorption des ondes acoustiques sur une plage de fréquence donnée. Pour qu'un résonateur soit efficace, sa plage de fréquence d'absorption doit comprendre la fréquence à laquelle le panneau est soumis. Or, les cavités de taille relativement réduite des panneaux acoustiques correspondent à des fréquences élevées. Il est ainsi difficile d'obtenir un panneau alvéolaire efficace pour certaines applications soumises à des basses fréquences.

Plus généralement, les panneaux acoustiques connus dans l'état de la technique sont généralement efficaces aux moyennes fréquences seulement. Par exemple, les groupes propulseurs des aéronefs commerciaux comportent un moteur à turbomachine et une nacelle pouvant comprendre un revêtement acoustique pour atténuer le bruit généré pendant le fonctionnement du moteur. Néanmoins, les fréquences acoustiques générées par le moteur d'un aéronef sont relativement basses et s'étendent sur une plage assez large. Les basses fréquences devant être atténuées sont par exemple les fréquences en dessous de 2000 Hz selon le moteur considéré. L'adoption de groupes propulseurs de grand diamètre tend à faire baisser plus encore les fréquences des ondes acoustiques qu'ils génèrent, notamment en dessous de 1000Hz. Or, la nécessité d'avoir des cellules de grand volume pour absorber des fréquences basses mène à des panneaux de grande épaisseur, peu compatibles d'une application aéronautique.

Le document US2015292413 présente un panneau acoustique dont la géométrie des cellules est améliorée dans le but d'une application à un moteur d'avion. En particulier, les cellules du revêtement acoustique décrit par le document US2015292413 s'étendent selon une forme courbe, en « S », de sorte à les allonger. L'augmentation de la longueur des cellules permet l'absorption de fréquences plus basses pour une même épaisseur de panneau qu'avec des cellules droites.

Néanmoins, un tel panneau acoustique permet un décalage limité des fréquences traitées vers les basses fréquences comparativement aux panneaux classiques à cellules droites, présente une faible tenue mécanique, et est difficile à produire.

L'état de la technique inclut également FR 3 060 829 A1 qui décrit une structure constituant un isolant acoustique comportant une première plaque, une deuxième plaque percée de trous, une âme collée entre la première plaque et la deuxième plaque, ladite âme comportant une pluralité de bandes intermédiaires perpendiculaires au moins à l'une de la première plaque et de la deuxième plaque et s'étendant entre les deux plaques, ainsi qu'une pluralité de bandes pliées en accordéon.

L'invention vise ainsi à proposer un revêtement acoustique permettant le traitement de fréquences basses, ayant de bonnes qualités structurales et pouvant être produit industriellement.

### EXPOSE DE L'INVENTION

Ainsi, l'invention porte sur un revêtement insonorisant comportant une structure alvéolaire formée dans une épaisseur du revêtement entre une première face ouverte, perméable aux ondes acoustiques, et une deuxième face fermée formée par une feuille de fermeture. La structure alvéolaire est constituée par accolement selon une direction dite transversale de plusieurs structures, chacune desdites structures étant formée par accolement dans la direction transversale d'une première bande longitudinale de première géométrie avec une deuxième bande longitudinale de deuxième géométrie. La première bande et la deuxième sont configurées de sorte que chaque structure présente successivement et de manière répétée dans la direction longitudinale:
- une première cavité s'étendant entre la première face et la deuxième face, ouverte au niveau de la première face et dont la section se rétrécit progressivement entre la première face et la deuxième face jusqu'à fermeture de ladite première cavité,
- un premier accolement de deux parois, respectivement de la première bande et de la deuxième bande, au contact l'une de l'autre sur une partie de l'épaisseur du revêtement, de sorte qu'un passage est ménagé entre la première cavité et une deuxième cavité,
- ladite deuxième cavité, qui est de section progressivement croissante entre la première face et la deuxième face et qui est fermée au niveau de la première face et au niveau de la deuxième face du revêtement par la feuille de fermeture,
- un deuxième accolement de deux parois, respectivement de la première bande et de la deuxième bande, au contact l'une de l'autre sur tout ou partie de l'épaisseur du revêtement.

La constitution de la structure alvéolaire du revêtement par accolement de structures elles-mêmes formées de deux bandes permet une réalisation simple de cette structure. En outre, la première cavité, ouverte sur la première face, forme un résonateur quart d'onde qui est lié à une deuxième cavité par un passage de section restreinte.

Ainsi, chaque ensemble formé d'une première cavité, d'un passage, et d'une deuxième cavité forme un résonateur, assimilable à un résonateur de Helmholtz, dont le col est formé par le passage. De tels résonateurs formés dans le revêtement acoustique permettent le traitement de fréquences acoustiques nettement plus basses qu'un revêtement acoustique à cellules droites ou courbes connu dans l'état de la technique.

Dans chaque structure, la première bande et la deuxième bande peuvent être symétriques selon un plan longitudinal.

Le passage entre la première cavité et la deuxième cavité peut avantageusement être formé à proximité de la deuxième face du revêtement. L'accolement des structures peut être réalisé en quinconce, chaque première cavité d'une structure étant adjacente, dans la direction transversale, à deux deuxièmes cavités de structures voisines, et chaque deuxième cavité d'une structure étant adjacente, dans la direction transversale, à deux premières cavités de structures voisines.

Une cavité intermédiaire, ouverte au niveau de la première face, peut être formée longitudinalement entre chaque première cavité de deux structures adjacentes transversalement.

Chaque première cavité peut présenter une section ouverte hexagonale au niveau de la première face, et chaque cavité intermédiaire peut présenter une section en parallélogramme au niveau de la première face.

Un drain peut être formé, à proximité de la deuxième face, entre deux cavités intermédiaires longitudinalement successives.

Dans un tel revêtement, peuvent être formées :
- pour chaque première cavité, un passage entre la deuxième cavité et chacune des premières cavités longitudinalement les plus proches de ladite deuxième cavité, mettant ainsi en communication lesdites premières cavités via ladite deuxième cavité, à proximité de la deuxième face du revêtement;
- pour chaque deuxième cavité, un conduit de section égale à ou plus petite que celle du passage et reliant ladite deuxième cavité à au moins une première cavité voisine, à proximité de la première face du revêtement.

L'invention porte également sur un groupe propulseur d'aéronef comportant une nacelle et un moteur, dans lequel une surface interne de la nacelle et/ou une surface externe d'un carter du moteur présente un revêtement insonorisant tel que précédemment décrit.

L'invention porte enfin sur un procédé de fabrication d'un tel revêtement insonorisant, comportant les étapes de :
- mise en forme de premières bandes comportant chacune dans une direction longitudinale une répétition d'un motif formé d'une demi première cavité, une première paroi dans un premier plan, une demi deuxième cavité, une deuxième paroi dans le premier plan P1, et un demi passage entre la demi première cavité et la demi deuxième cavité au niveau de la première paroi,
- mise en forme de deuxièmes bandes comportant chacune dans la direction longitudinale une répétition d'un motif formé d'une demi première cavité, une première paroi dans un deuxième plan, une demi deuxième cavité, une deuxième paroi dans le deuxième plan, et un demi passage est formé entre la demi première cavité et la demi deuxième cavité, au niveau de la première paroi ;
- formation de structures par accolement dans une direction transversale d'une première bande avec une deuxième bande longitudinale,
- accolement selon la direction transversale de plusieurs structures.

### DESCRIPTION SOMMAIRE DES DESSINS

D'autres particularités et avantages de l'invention apparaîtront encore dans la description ci-après.

Aux dessins annexés, donnés à titre d'exemples non limitatifs :
- la figure 1 représente, selon une vue schématique en trois dimensions, un revêtement acoustique conforme à l'état de la technique ;
- la figure 2 représente, selon une vue schématique en trois dimensions, des éléments constitutifs du revêtement de la figure 1 ;
- la figure 3 représente, selon une vue schématique en trois dimensions, les éléments de la figure 2 après assemblage ;
- la figure 4 représente, selon une vue schématique en trois dimensions, des éléments constitutifs d'un revêtement acoustique conforme à un exemple de mode de réalisation de l'invention ;
- la figure 5 représente, selon une vue schématique en trois dimensions, les éléments de la figure 4 après assemblage, formant une structure constitutive d'un revêtement acoustique conforme à un exemple de mode de réalisation de l'invention ;
- la figure 6 représente, selon une vue schématique en trois dimensions, deux structures selon la figure 5 ;
- la figure 7 représente, selon une vue schématique en trois dimensions, les structures de la figure 6 après assemblage, formant une portion de revêtement acoustique ;
- la figure 8 représente, selon une vue schématique, une première face d'un revêtement acoustique conforme à un exemple de mode de réalisation de l'invention ;
- la figure 9 représente, selon une vue schématique en trois dimensions, un élément constitutif d'un revêtement acoustique conforme à un exemple de mode de réalisation de l'invention à drainage optimisé ;
- la figure 10 représente, selon une vue schématique en trois dimensions, une structure constitutive d'un revêtement acoustique conforme à un exemple de mode de réalisation de l'invention à drainage optimisé ;
- la figure 11 représente, selon une vue schématique en trois dimensions, deux éléments assemblés constitutifs d'un revêtement acoustique conforme à un exemple de mode de réalisation de l'invention à drainage optimisé ;
- la figure 12 représente schématiquement selon une vue en coupe un groupe propulseur d'aéronef dont la nacelle est équipée d'un revêtement insonorisant.

### MANIERES DE REALISER L'INVENTION

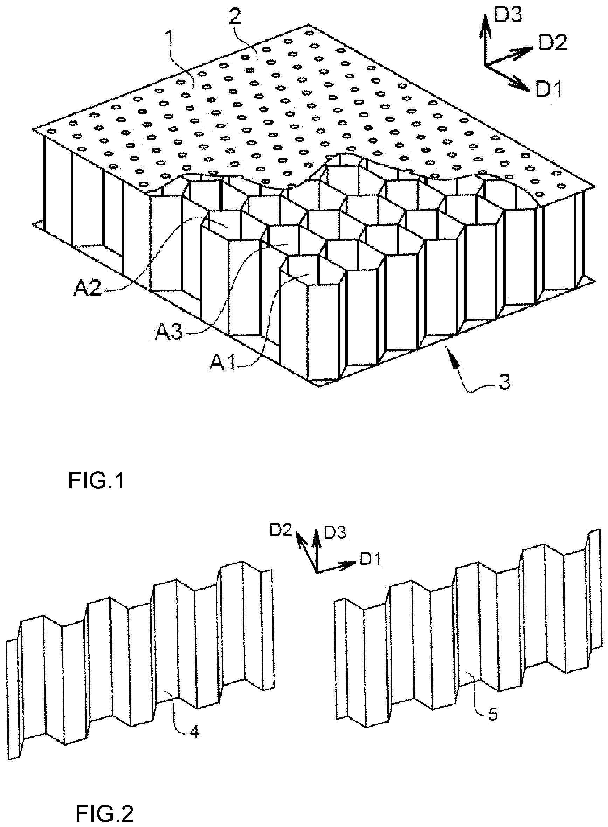

La figure 1 représente schématiquement un revêtement insonorisant connu dans l'état de la technique. Il comporte des cellules (ou cavités) A1, A2, A3, etc. juxtaposées les unes aux autres dans deux directions orthogonales entre elles de sorte à former une structure alvéolaire. Une première direction D1 de juxtaposition des cellules est dite longitudinale, et une deuxième direction D2 de juxtaposition des cellules, orthogonale à la première direction D1, est dite transversale. Une troisième direction D3, dans laquelle s'étend l'épaisseur du panneau, est définie orthogonalement à la première direction D1 et à la deuxième direction D2. La troisième direction D3 peut être conventionnellement appelée direction verticale D3 (sans qu'il soit pour autant préjugé de l'orientation du revêtement insonorisant).

Sur une première face 1 du revêtement, les cellules A1...A3 sont ouvertes. Une feuille perforée 2 les recouvre, formant une surface résistive permettant la communication des cellules A1 ...A3 avec le milieu extérieur, de sorte que la première face 1 est dite ouverte.

Sur une deuxième face 3, les cellules A1 ...A4 sont fermées par une feuille de fermeture, par exemple une feuille pleine, obstruant le fond des cellules.

Dans l'état de la technique, tout comme dans l'invention, la feuille de fermeture est généralement une feuille pleine. Il peut néanmoins s'agir d'une feuille présentant des trous. En effet, une feuille pleine est employée pour les traitements acoustiques simples, dit SDOF selon l'expression anglophone « Single Degree of Freedom » (simple degré de liberté) et forme une peau arrière réfléchissante vis-à-vis des ondes acoustiques. Une feuille de fermeture présentant des trous est employée pour les traitements acoustiques dit DDOF selon l'expression anglophone « Double Degree of Freedom » (double degré de liberté) pour lesquels un empilement de deux étages de nid d'abeille est réalisé, les étages étant séparés par une peau poreuse intermédiaire formée par ladite feuille de fermeture.

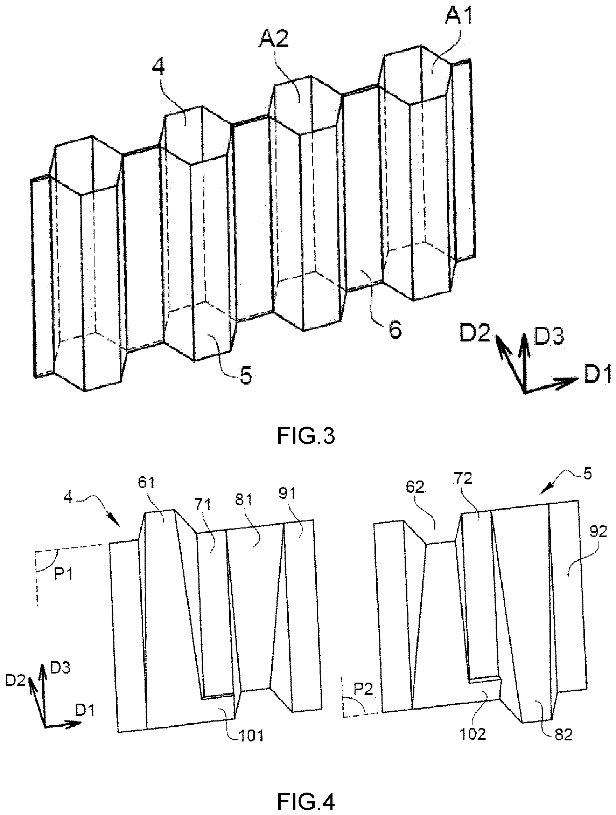

Bien qu'il ne soit pas exclu, l'empilement de deux structures alvéolaires telles que formées dans l'invention, et dont des exemples sont décrits ci-après en référence au figures 4 à 11, présente un intérêt généralement limité, car un tel empilement de structures conduit de manière générale à un revêtement acoustique épais, tandis que la structure développée dans l'invention permet de limiter l'épaisseur de la structure comparativement aux structures connues permettant le traitement de fréquences acoustiques similaires.

Sur la figure 1, afin de mieux montrer la structure cellulaire, le revêtement insonorisant est représenté seulement en partie recouvert sur sa première face 1 par la feuille perforée 2. Les cellules de la structure alvéolaire ici représentées sont dites hexagonales, en ce que leur volume est celui d'un prisme droit de base hexagonale s'étendant entre la première face 1 et la deuxième face 3 du revêtement insonorisant.

Les cellules hexagonales sont disposées en quinquonce, avec un décalage longitudinal permettant de s'imbriquer sans volume mort.

La figure 2 représente deux bandes permettant de constituer la structure cellulaire du revêtement de la figure 1, selon une technique connue dans l'état de la technique sur laquelle se fonde la présente invention.

En particulier, une première bande 4 présente une ondulation formée par des pliages réguliers successifs. Chaque ondulation forme la moitié d'une cellule hexagonale. Une deuxième bande 5 est identique à la première bande 4.

La première bande 4 et la deuxième bande 5 sont accolées l'une à l'autre, de sorte à former une structure présentant une succession longitudinale de cellules hexagonales A1, A2 ; entre lesquelles des parois 6 sont au contact et liées entre elles, par exemple par collage ou soudage. En accolant et en fixant transversalement (selon la deuxième direction D2) à la structure de la figure 3 une autre structure identique, et ainsi de suite, la structure cellulaire du revêtement de la figure 1 est obtenue.

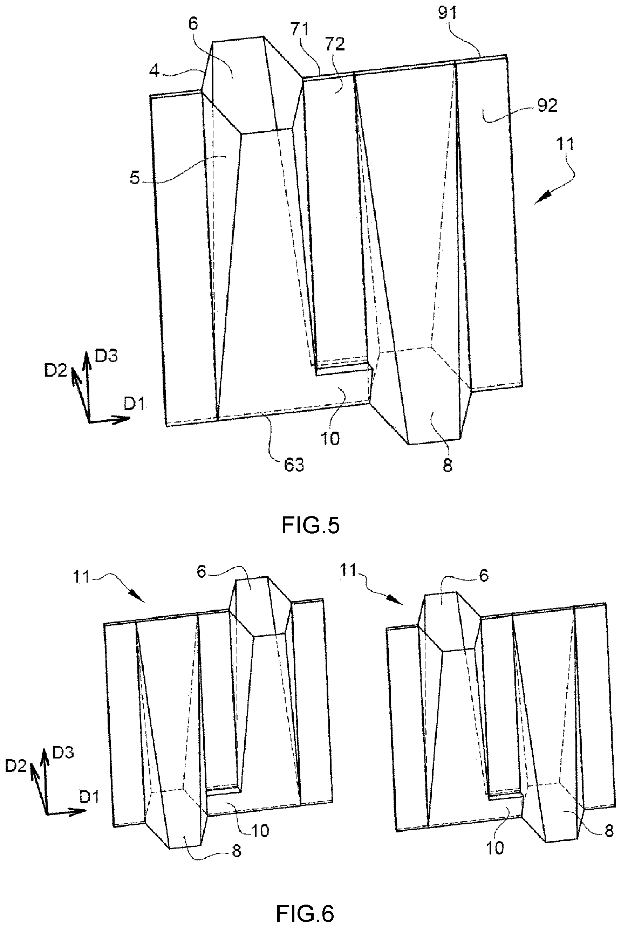

La figure 4 représente des éléments, à savoir des bandes, constitutives d'un revêtement acoustique conforme à un exemple de mode de réalisation de l'invention. Plus précisément, la figure 4 représente une petite portion longitudinale (selon la direction longitudinale D1) respectivement d'une première bande 4 et d'une deuxième bande 5 destinées à être accolées et fixées l'une à l'autre transversalement (selon la direction transversale D2), afin de former une structure longitudinale dont une portion est représentée à la figure 5.

La première bande 4 et la deuxième bande 5 s'étendent essentiellement selon un plan s'étendant selon la direction longitudinale D1 et la direction verticale D3. La première bande 4 s'étend selon un premier plan P1 ; la deuxième bande 5 s'étend selon un deuxième plan P2.

Chacune des première bande 4 et deuxième bande 5 présente des déformations, respectivement dans une seule direction transversale. Les déformations forment ainsi des creux vis-à-vis respectivement du premier plan P1 (pour la première bande 4) et du deuxième plan P2 (pour la deuxième bande 5).

Selon leur mode de constitution le plus simple, la première bande 4 et la deuxième bande 5 sont métalliques, et sont mises en forme par une technique de formage. Les techniques de formage envisageables comportent par exemple l'emboutissage et l'hydroformage.

En particulier, la première bande 4 comporte, successivement dans la direction longitudinale D1, une demi première cavité 61, une première paroi 71 dans le premier plan P1, une demi deuxième cavité 81, une deuxième paroi 91 dans le premier plan P1.

Un demi passage 101 est formé entre la demi première cavité et la demi deuxième cavité 81, au niveau de la première paroi 71.

Le motif ci-dessus décrit est répété dans la direction longitudinale.

Dans l'exemple ici représenté, la première bande 4 et la deuxième bande 5 sont de formes similaires, en miroir l'une de l'autre, de sorte qu'elles sont symétriques l'une de l'autre, lorsqu'elles sont accolées comme décrit ci-après, par rapport à leur plan d'accolement. Ainsi, la deuxième bande 5 comporte, successivement dans la direction longitudinale D1, une demi première cavité 62, une première paroi 72 dans le deuxième plan P2, une demi deuxième cavité 82, une deuxième paroi 92 dans le deuxième plan P2.

Un demi passage 102 est formé entre la demi première cavité 62 et la demi deuxième cavité 82, au niveau de la première paroi 72.

La première bande 4 et la deuxième bande 5 sont accolées et assemblées, à savoir que le premier plan P1 est mis au contact du deuxième plan P2. Les bandes sont fixées entre elles, par exemple par collage ou soudage de leurs zones de contact, en particulier entre leurs premiers plans 71,72 respectifs et entre leurs deuxièmes plans 91,92 respectifs. La demi première cavité 61 de la première bande 4 est mise en regard de la première demi cavité 62 de la deuxième bande 5, formant ainsi une première cavité 8. La demi deuxième cavité 81 de la première bande 4 est mise en regard de la deuxième demi cavité 82 de la deuxième bande 5, formant ainsi une deuxième cavité 8. Le demi passage 101 de la première bande 4 est mis en regard du deuxième demi passage 102 de la deuxième bande 5, formant ainsi un passage 10 entre la première cavité 6 et la deuxième cavité 8.

L'assemblage d'une première bande 4 avec une deuxième bande 5 forme ainsi une structure 11 tridimensionnelle, s'étendant essentiellement selon la direction longitudinale D1, et représentée à la figure 5.

Du fait de la conformation respective de la première bande 4 et de la deuxième bande 5, la structure 11 présente les caractéristiques suivantes.

La première cavité 6 est ouverte sur une face parallèle à la direction longitudinale D1 et à la direction transversale D2, cette face correspondant à la première face 1 d'un revêtement qui sera constitué comme expliqué ci-après en référence aux figures 6 à 8. L'ouverture de la première cavité 6 est de section hexagonale. La section de la première cavité 6 se restreint progressivement en direction du fond 63 de la première cavité 6. Dans l'exemple ici représenté, la section se restreint jusqu'à s'annuler et prendre la forme d'une ligne droite à la jonction de la première brande 4 avec la deuxième bande 5 formant le fond 63 de la première cavité 6, au droit d'une médiane de l'hexagone formé par l'ouverture de la première cavité 6. Le fond 63 peut être situé au niveau de la deuxième face 3, comme dans l'exemple ici représenté, ou entre la première face 1 et la deuxième face 3. Ainsi, dans l'exemple ici représenté, au niveau du fond 63, c'est à dire au niveau de la deuxième face 3 du revêtement insonorisant une fois ce dernier formé (exception faite de la feuille de fermeture, de faible épaisseur, à savoir ici une feuille pleine, fermant ladite deuxième face 3), la première bande 4 est au contact de la deuxième bande 5.

La deuxième cavité 8, qui s'étend avantageusement sur toute la hauteur (dimensions selon la troisième direction D3) de la structure 11, sera fermée une fois le revêtement constitué tant au niveau de la première face 1 qu'au niveau de la deuxième face 3. En effet, la deuxième cavité 8 présente une forme identique à celle de la première cavité 6, mais avec une orientation opposée selon la troisième direction D3. Ainsi, au niveau de la première face ou à proximité de cette dernière, la première bande 4 est au contact de la deuxième bande 5, ce qui ferme ladite deuxième cavité 8 au niveau de ladite première face 1 du revêtement. Notamment, le contact entre la première bande 4 et la deuxième bande 5 peut prendre la forme d'une ligne droite au droit d'une médiane de l'hexagone formé par la section de la deuxième cavité 8 au niveau de la deuxième face 3. Ainsi, au niveau de la deuxième face 3, où la deuxième cavité 8 de la structure 11 est ouverte selon une section hexagonale, ladite deuxième cavité 8 est fermée une fois le revêtement constitué par la feuille de fermeture formant la deuxième face 3.

La configuration ici représentée permet de maximiser la hauteur des premières cavités 6, tout en maximisant le volume des deuxièmes cavités 8 (ce qui permet de traiter des fréquences plus basse qu'avec des cavités de volume plus faible), sans perdre de surface acoustique. Elle ne présente pas de ruptures de pente dans la hauteur des parois, ce qui conduirait à une solution difficilement fabricable.

Dans une structure 11 et dans la structure alvéolaire qui est formée au final, chaque première cavité 6 forme un résonateur quart d'onde. L'ensemble comportant le passage 10 et la cavité 8 forme un résonateur de Helmholtz dont le col est formé par le passage 10. Le résonateur quart d'onde et le résonateur de Helmholtz sont donc couplés en série à l'entrée du passage 10.

La figure 6 représente deux structures 11 destinées à être accolées et assemblées transversalement pour former une partie de la structure alvéolaire d'un revêtement insonorisant. Les deux structures 11 de la figure 6 sont identiques entre elles, et les portions longitudinales représentées sont également identiques. L'une des deux structures 11 a néanmoins été retournée par rapport à l'autre dans la direction longitudinale (c'est-à-dire tournée de 180° autour de la direction verticale D3).

De manière générale, deux structures 11 adjacentes transversalement sont montées en quinconce, c'est-à-dire que chaque première cavité 6 d'une structure 11 est adjacente, dans la direction transversale D2, à deux deuxièmes cavités 8 de structures voisines, et chaque deuxième cavité 8 d'une structure 11 est adjacente, dans la direction transversale D2, à deux premières cavités 6 de structures voisines.

Une telle configuration en quinconce peut être obtenue par un montage alterné de structures 11 tournées à 180° par rapport à ses voisines, ou par un montage avec un décalage longitudinal d'une structure 11 sur deux. La solution mettant en oeuvre un décalage longitudinal présente néanmoins la difficulté technique que les structures présentent après assemblage des extrémités longitudinales décalées, ce qui nécessite un traitement particulier des bords longitudinaux du revêtement (découpe, ou comblement de ce décalage, etc.).

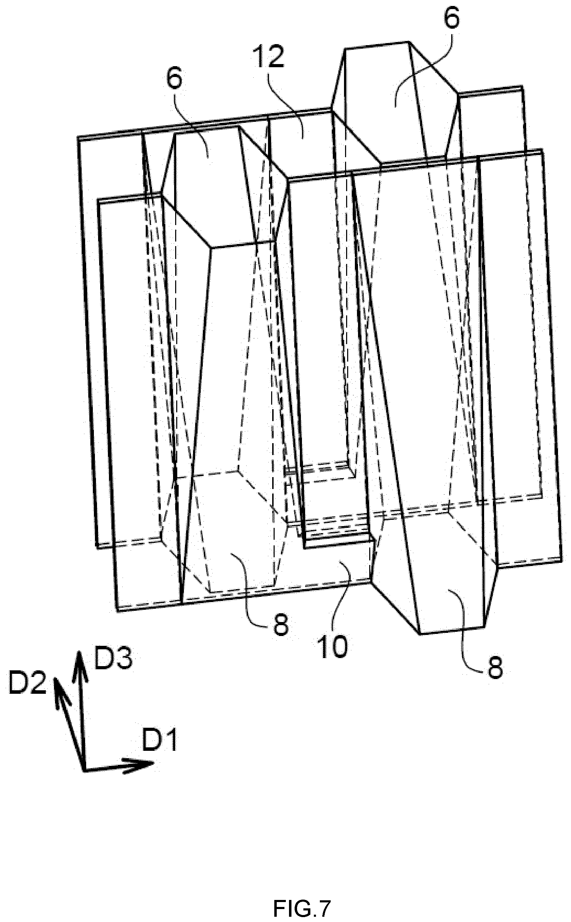

Le résultat de l'accolement transversal et de l'assemblage des deux structures 11 de la figure 6 est représenté à la figure 7.

Du fait des restrictions de section respectives des premières cavités 6 et des deuxièmes cavités 8, lesdites premières cavités 6 et deuxièmes cavités 8 s'imbriquent les unes avec les autres transversalement, de sorte que les parois limitant dans la direction transversale D2 lesdites premières cavités et deuxièmes cavités viennent au contact les unes des autres.

Il est notable que l'accolement de deux structures 11 forme en outre des cavités intermédiaires 12. Les cavités intermédiaires 12 sont dans des intervalles longitudinaux situés entre les premières cavités et les deuxièmes cavités de deux structures 11 adjacentes transversalement. Les cavités intermédiaires 12 ont une section sensiblement en parallélogramme au niveau de la première face 1. Les cavités intermédiaires 12 s'étendent transversalement entre les parois 71,72,91,92 des premières bandes et deuxièmes bandes accolées entre elles pour former les structures 11. Les cavités intermédiaires 12 sont fermées au niveau de la deuxième face 3 par la feuille de fermeture installée au niveau de ladite deuxième face 3 du revêtement insonorisant.

La section des cavités intermédiaires 12 évolue dans l'épaisseur du revêtement insonorisant (dans la troisième direction D3), car cette section est définie :
- à proximité de la première face 1 transversalement par les parois 71,72,91,92 des premières bandes 4 et deuxièmes bandes 5 accolées entre elles et longitudinalement par les parois de deux premières cavités 6 de structures adjacentes 11,
- à proximité de de la deuxième face 3 transversalement par les parois 71,72,91,92 des premières bandes 4 et deuxièmes bandes 5 accolées entre elles et longitudinalement par les parois de deux deuxièmes cavités 8 de structures 11 adjacentes,
- et dans l'épaisseur du revêtement, transversalement par les parois 71,72,91,92 des premières bandes 4 et deuxièmes bandes 5 accolées entre elles, et longitudinalement pour partie par les parois de deux premières cavités 6 de structures 11 adjacentes et pour partie par les parois de deux deuxièmes cavités 8 de structures adjacentes 11.

La formation d'une structure alvéolaire de revêtement insonorisant par accolement de structures de géométries complémentaires, leur permettant de s'imbriquer en formant entre elles les cavités souhaitées, permet en outre d'éviter l'accolement de multiples parois dans la structure alvéolaire, ce qui optimise la masse du revêtement.

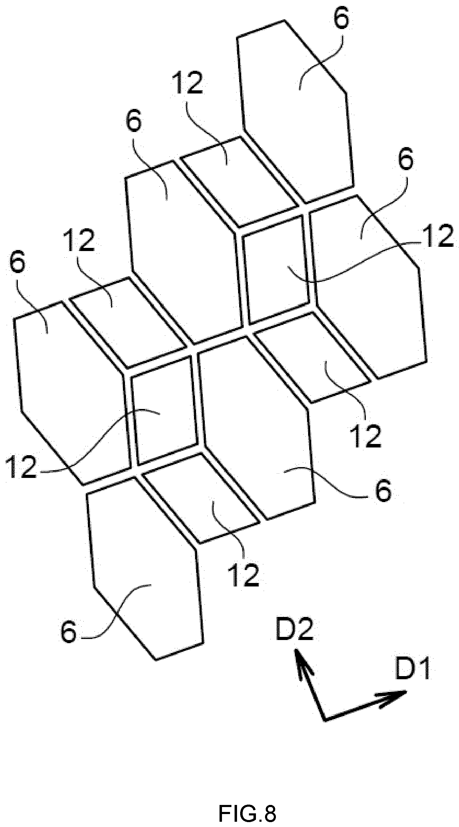

La répartition des ouvertures des cavités dans l'exemple de mode de réalisation représenté, au niveau de la première face 1, est représentée à la figure 8. Sur la première face 1 débouchent ainsi les premières cavités 6 et les cavités intermédiaires 12, de manière régulière et parfaitement imbriquées.

Il est notable qu'au niveau de la deuxième face 3, en l'absence de feuille de fermeture, un motif analogue serait observé formé par les deuxièmes cavités 8 d'ouverture hexagonale et les cavités intermédiaires 12 d'ouverture à section en parallélogramme au niveau de la deuxième face 3.

Les cavités intermédiaires 12 forment des résonateurs capables de traiter des plages de fréquences acoustiques différentes (a priori plus élevées) que celles traitées par les premières cavités et deuxièmes cavités formant le couplage des résonateurs de Helmholtz et quart d'onde.

Ainsi, le revêtement acoustique présente une structure alvéolaire présentant trois types et dimensions de cavités, ce qui permet de traiter une plage de fréquence très large comparativement à un revêtement présentant une seule géométrie de cellules.

La structure alvéolaire obtenue par accolement transversal de structures 11 elles-mêmes obtenues par accolement transversal de bandes 4,5 mises en forme est ainsi relativement simple à réaliser et à mettre en oeuvre. Il est en outre possible de donner une courbure, notamment transversale, à cette structure alvéolaire. Un revêtement insonorisant est obtenu en ajoutant une feuille de fermeture, typiquement une feuille pleine, sur l'une des surfaces de la structure alvéolaire, formant ainsi une face fermée, et une feuille résistive (par exemple une feuille de métal ou de carbone dotée de multiples perforations ou une feuille comportant un tissu métallique perméable aux ondes acoustiques) sur l'autre face qui reste ainsi ouverte.

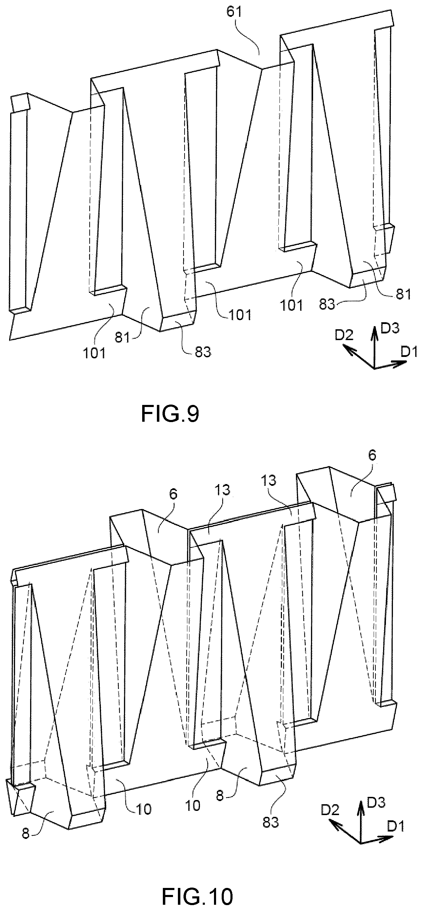

Un dernier aspect de l'invention est illustré aux figures 9 à 11. Dans un panneau ou revêtement insonorisant, il est important de prévoir des moyens qui en permettent le drainage, c'est-à-dire l'évacuation de l'eau qui peut pénétrer ou se former par condensation dans la structure alvéolaire du revêtement.

Le drainage consiste à mettre en relation les cavités entre elles par des passages de faible section permettant la circulation par gravité de l'eau présente dans la structure, jusqu'à un ou plusieurs points d'évacuation.

La figure 9 illustre une deuxième bande 5, dotée d'un exemple de moyens de drainage applicables à l'invention. La figure 10 illustre une structure 11 formée de la deuxième bande 5 de la figure 9 et d'une première bande 4 symétrique, qui lui est accolée.

Pour ce qui concerne les premières cavités 6 et deuxième cavité 8, il convient de permettre le drainage au niveau de la deuxième face 3, qui est fermée. Pour cela, outre le passage 10 formé entre une première cavité 6 et une deuxième cavité 8 voisine, un passage 10 analogue ou de plus faible section est formé (par un demi passage 101 formé dans la deuxième bande 5 et un demi passage formé en correspondance dans la première bande 4) vers l'autre deuxième cavité 8 voisine. Ainsi, dans une structure 11, un écoulement de l'eau est possible sur toute la longueur de la structure entre les premières et deuxièmes cavités, au niveau de la deuxième face 3, jusqu'à évacuation du revêtement typiquement en un point bas de celui-ci.

Pour ce qui concerne les deuxièmes cavités 8, qui sont également fermées au niveau de la première face, des conduits 13, analogues aux passages 10 mais de plus faible section, sont formés entre chaque deuxième cavité 8 et ses premières cavités 6 voisines, au niveau de la première face 1.

Ceci permet la communication entre les deuxièmes cavités 8 et les premières cavités 6 d'une structure 11, au niveau de la première face 1, et l'évacuation de l'eau par la face ouverte des premières cavités et le cas échéant par la feuille résistive de la première face 1, ou par une évacuation en un point bas du revêtement.

Concernant les cavités intermédiaires, fermées au niveau de la deuxième surface, elles sont mises en communication entre elles par un drain 14 formé au niveau de la deuxième face 3. Pour former le drain 14, une échancrure longitudinale 83 est formée par la paroi délimitant transversalement chaque deuxième cavité 8.

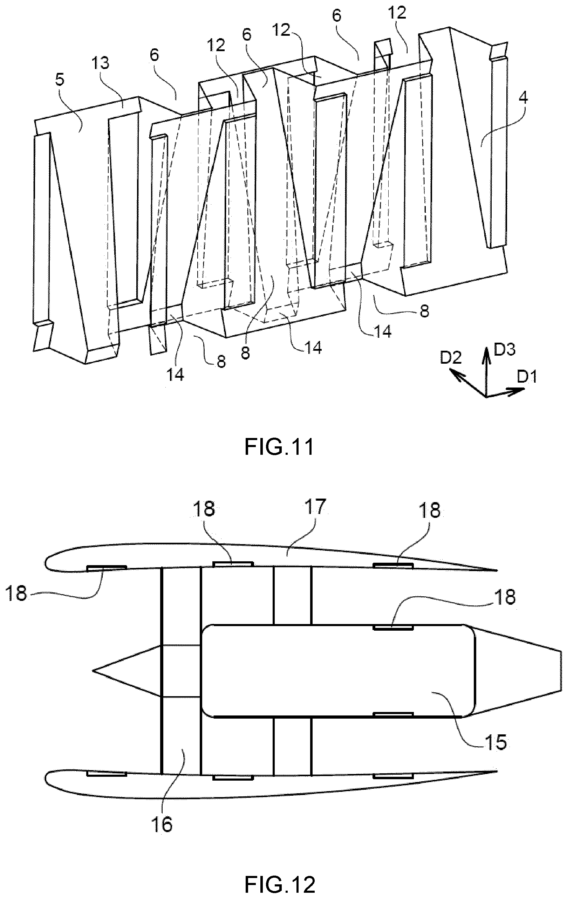

La figure 11 représente le deuxième panneau 5 et le premier panneau 4 de deux structures 11 adjacentes transversalement. Comme illustré à la figure 11, lors de l'assemblage de deux structures 11 adjacentes, il demeure un espace formant le drain 14 entre la paroi délimitant transversalement la deuxième cavité 8 et la paroi de la première cavité 6 correspondante de la structure adjacente.

L'invention trouve une application préférentielle dans la formation d'un panneau insonorisant pour nacelle d'un groupe propulseur d'aéronef. Un groupe propulseur d'aéronef est représenté schématiquement en coupe à la figure 12.

Il comporte un moteur 15 comportant une turbomachine équipée d'une soufflante 16, et qui est installé dans une nacelle 17. Le revêtement 18 peut être installé en divers endroits particulièrement exposés à des ondes acoustiques, dans la nacelle et plus généralement dans le groupe propulseur. Le revêtement insonorisant 18, selon un mode de réalisation de l'invention, peut être installé de sorte à former, au moins en partie, la face interne de la partie antérieure de la nacelle du groupe propulseur d'aéronef. Le revêtement 18 peut être installé dans une zone médiane de la face interne de la nacelle, à l'arrière de la soufflante 16. Le revêtement 18 peut également être installé sur une face interne de la partie arrière de la nacelle. Le revêtement 18 peut également être installé sur un carter du moteur 15.

L'invention ainsi développée offre un revêtement acoustique adapté au traitement de basses fréquences comparativement aux revêtements de même épaisseur connus dans l'état de la technique. En outre, grâce à la présence de cavités de trois tailles de formes différentes, à savoir des premières et deuxièmes cavités en communication entre elles pour former des résonateurs de Helmholtz pour le traitement de basses fréquences et des cavités intermédiaires pour le traitement de fréquences plus élevées, la plage des fréquences traitées par le revêtement est non seulement décalée par rapport à un panneau acoustique classique, mais également élargie.

La formation du revêtement, en particulier de sa structure alvéolaire, par des structures de géométries complémentaires permet d'éviter l'accolement de multiples parois, ce qui optimise la masse du revêtement. Ce revêtement peut être obtenu par des procédés industriels classiques de formage. Il est aisé à mettre en oeuvre. Le drainage de l'eau présente dans la structure alvéolaire peut y être aisément organisé. L'invention est compatible de la formation d'un revêtement insonorisant courbe. Le revêtement trouve ainsi une application préférentielle dans les nacelles de groupe propulseur d'aéronefs, dont les surfaces présentent un ou deux rayons de courbure.

## Revendications

1. Revêtement insonorisant comportant une structure alvéolaire formée dans une épaisseur du revêtement entre une première face (1) ouverte, perméable aux ondes acoustiques, et une deuxième face (3) fermée formée par une feuille de fermeture,
**caractérisé en ce que** la structure alvéolaire est constituée par accolement selon une direction dite transversale (D2) de plusieurs structures (11), chacune desdites structures (11) étant formée par accolement dans la direction transversale (D2) d'une première bande (4) longitudinale de première géométrie avec une deuxième bande longitudinale (5) de deuxième géométrie,
la première bande (4) et la deuxième bande (5) formant une structure (11) étant configurées de sorte que chaque structure (11) présente successivement et de manière répétée dans la direction longitudinale (D1) :
- une première cavité (6) s'étendant entre la première face (1) et la deuxième face (3), ouverte au niveau de la première face (1) et dont la section se rétrécit progressivement entre la première face (1) et la deuxième face (3) jusqu'à fermeture de ladite première cavité (6),
- un premier accolement de deux parois (71,72), respectivement de la première bande (4) et de la deuxième bande (5), au contact l'une de l'autre sur une partie de l'épaisseur du revêtement, de sorte qu'un passage (10) est ménagé entre la première cavité (6) et une deuxième cavité (8),
- ladite deuxième cavité (8), qui est de section progressivement croissante entre la première face (1) et la deuxième face (3) et qui est fermée au niveau de la première face (1) et au niveau de la deuxième face (3) du revêtement par la feuille de fermeture,
- un deuxième accolement de deux parois (91,92), respectivement de la première bande (4) et de la deuxième bande (5), au contact l'une de l'autre sur tout ou partie de l'épaisseur du revêtement.

2. Revêtement insonorisant selon la revendication 1 dans lequel, dans chaque structure (11), la première bande (4) et la deuxième bande (5) sont symétriques selon un plan longitudinal.

3. Revêtement insonorisant selon la revendication 1 ou la revendication 2, dans lequel le passage (10) entre la première cavité (6) et la deuxième cavité (8) est formé à proximité de la deuxième face (3) du revêtement.

4. Revêtement insonorisant selon l'une des revendications précédentes, dans lequel l'accolement des structures (11) est réalisé en quinconce, chaque première cavité (6) d'une structure (11) étant adjacente, dans la direction transversale (D2), à deux deuxièmes cavités (8) de structures (11) voisines, et chaque deuxième cavité (8) d'une structure (11) étant adjacente, dans la direction transversale (D2), à deux premières cavités (6) de structures (11) voisines.

5. Revêtement insonorisant selon la revendication 4, dans lequel une cavité intermédiaire (12), ouverte au niveau de la première face (1), est formée longitudinalement entre chaque première cavité (6) de deux structures (11) adjacentes transversalement.

6. Revêtement insonorisant selon la revendication 5, dans lequel chaque première cavité (6) présente une section ouverte hexagonale au niveau de la première face (1), et chaque cavité intermédiaire (12) présente une section en parallélogramme au niveau de la première face (1).

7. Revêtement insonorisant selon la revendication 5 ou la revendication 6, dans lequel un drain (14) est formé, à proximité de la deuxième face (3), entre deux cavités intermédiaires (12) longitudinalement successives.

8. Revêtement insonorisant selon l'une des revendications précédentes, dans lequel sont formées :
- pour chaque première cavité, un passage (10) entre la deuxième cavité (8) et chacune des premières cavités (6) longitudinalement les plus proches de ladite deuxième cavité (8), mettant ainsi en communication lesdites premières cavités (6) via ladite deuxième cavité (8), à proximité de la deuxième face (3) du revêtement;
- pour chaque deuxième cavité (8), un conduit (13) de section égale à ou plus petite que celle du passage (10) reliant ladite deuxième cavité (8) à au moins une première cavité (6) voisine, à proximité de la première face (1) du revêtement.

9. Groupe propulseur d'aéronef comportant une nacelle (17) et un moteur (15), dans lequel une surface interne de la nacelle (17) et/ou une surface externe d'un carter du moteur (15) présente un revêtement insonorisant (18) selon l'une des revendications 1 à 8.

10. Procédé de fabrication d'un revêtement insonorisant selon l'une des revendications 1 à 8, comportant les étapes de :
- mise en forme de premières bandes comportant chacune dans une direction longitudinale (D1) une répétition d'un motif formé d'une demi première cavité (61), une première paroi (71) dans un premier plan (P1), une demi deuxième cavité (81), une deuxième paroi (91) dans le premier plan P1, et un demi passage (101) entre la demi première cavité (61) et la demi deuxième cavité (81) au niveau de la première paroi (71),
- mise en forme de deuxièmes bandes comportant chacune dans la direction longitudinale (D1) une répétition d'un motif formé d'une demi première cavité (62), une première paroi (72) dans un deuxième plan (P2), une demi deuxième cavité (82), une deuxième paroi (92) dans le deuxième plan (P2), et un demi passage (102) est formé entre la demi première cavité (62) et la demi deuxième cavité (82), au niveau de la première paroi (72) ;
- formation de structures (11) par accolement dans une direction transversale (D2) d'une première bande (4) avec une deuxième bande longitudinale (5) ;
- accolement selon la direction transversale (D2) de plusieurs structures (11).

## Patentansprüche

1. Schalldämmende Beschichtung, die eine Zellstruktur umfasst, die zwischen einer offenen, für akustische Wellen durchlässigen ersten Seite (1) und einer geschlossenen zweiten Seite (3), die durch eine Verschlussfolie gebildet ist, in einer Dicke der Beschichtung gebildet ist,
**dadurch gekennzeichnet, dass** die Zellstruktur durch das Aneinanderfügen mehrerer Strukturen (11) gemäß einer sogenannten Querrichtung (D2) geschaffen wird, wobei jede der Strukturen (11) durch das Aneinanderfügen, in der Querrichtung (D2), eines ersten Längsstreifens (4) mit einer ersten Geometrie und eines zweiten Längsstreifens (5) mit einer zweiten Geometrie gebildet wird,
wobei der erste Streifen (4) und der zweite Streifen (5) eine Struktur (11) bilden, die so konfiguriert ist, dass jede Struktur (11) in der Längsrichtung (D1) nacheinander und wiederholt Folgendes aufweist:
- einen ersten Hohlraum (6), der sich zwischen der ersten Seite (1) und der zweiten Seite (3) erstreckt, der im Bereich der ersten Seite (1) offen ist und dessen Querschnitt zwischen der ersten Seite (1) und der zweiten Seite (3) graduell abnimmt, bis der erste Hohlraum (6) geschlossen ist,
- eine erste Aneinanderfügung von zwei Wänden (71, 72) jeweils des ersten Streifens (4) und des zweiten Streifens (5), die über einen Teil der Dicke der Beschichtung miteinander in Kontakt stehen, sodass zwischen dem ersten Hohlraum (6) und einem zweiten Hohlraum (8) ein Durchgang (10) eingerichtet ist,
- den zweiten Hohlraum (8), der zwischen der ersten Seite (1) und der zweiten Seite (3) einen graduell zunehmenden Querschnitt aufweist und der im Bereich der ersten Seite (1) geschlossen ist und im Bereich der zweiten Seite (3) der Beschichtung durch die Verschlussfolie geschlossen ist,
- eine zweite Aneinanderfügung von zwei Wänden (91, 92) jeweils des ersten Streifens (4) und des zweiten Streifens (5), die über die gesamte oder einen Teil der Dicke der Beschichtung miteinander in Kontakt stehen.

2. Schalldämmende Beschichtung nach Anspruch 1, wobei in jeder Struktur (11) der erste Streifen (4) und der zweite Streifen (5) gemäß einer Längsebene symmetrisch sind.

3. Schalldämmende Beschichtung nach Anspruch 1 oder Anspruch 2, wobei der Durchgang (10) zwischen dem ersten Hohlraum (6) und dem zweiten Hohlraum (8) in der Nähe der zweiten Seite (3) der Beschichtung gebildet ist.

4. Schalldämmende Beschichtung nach einem der vorhergehenden Ansprüche, wobei das Aneinanderfügen der Strukturen (11) versetzt vorgenommen wird, wobei jeder erste Hohlraum (4) einer Struktur (11) in der Querrichtung (D2) an zwei zweite Hohlräume (8) von benachbarten Strukturen (11) angrenzt und wobei jeder zweite Hohlraum (8) einer Struktur (11) in der Querrichtung (D2) an zwei erste Hohlräume (4) von benachbarten Strukturen (11) angrenzt.

5. Schalldämmende Beschichtung nach Anspruch 4, wobei längs zwischen jedem ersten Hohlraum (6) zweier in Querrichtung angrenzenden Strukturen (11) ein Zwischenhohlraum (12) gebildet ist, der im Bereich der ersten Seite (1) offen ist.

6. Schalldämmende Beschichtung nach Anspruch 5, wobei jeder erste Hohlraum (6) im Bereich der ersten Seite (1) einen hexagonalen offenen Querschnitt aufweist und jeder Zwischenhohlraum (12) im Bereich der ersten Seite (1) einen parallelogrammförmigen Querschnitt aufweist.

7. Schalldämmende Beschichtung nach Anspruch 5 oder Anspruch 6, wobei in der Nähe der zweiten Seite (3) zwischen zwei längs aufeinanderfolgenden Zwischenhohlräumen (12) ein Ablauf (14) gebildet ist.

8. Schalldämmende Beschichtung nach einem der vorhergehenden Ansprüche, in der Folgendes gebildet ist:
- für jeden ersten Hohlraum, ein Durchgang (10) zwischen dem zweiten Hohlraum (8) und jedem der ersten Hohlräume (6), die dem zweiten Hohlraum (8) in Längsrichtung am nächsten sind, sodass die ersten Hohlräume (6) in der Nähe der zweiten Seite (4) der Beschichtung über den zweiten Hohlraum (8) in Kommunikation stehen;
- für jeden zweiten Hohlraum (8), ein Kanal (13) mit einem Querschnitt gleich oder kleiner als dem des Durchgangs (10), der den zweiten Hohlraum (8) in der Nähe der ersten Seite (1) der Beschichtung mit mindestens einem benachbarten ersten Hohlraum (6) verbindet.

9. Flugzeugtriebwerk, das eine Gondel (17) und einen Motor (15) umfasst, wobei eine Innenoberfläche der Gondel (17) und/oder eine Außenoberfläche eines Gehäuses des Motors (15) eine schalldämmende Beschichtung (18) nach einem der Ansprüche 1 bis 8 aufweist.

10. Verfahren zur Fertigung einer schalldämmenden Beschichtung nach einem der Ansprüche 1 bis 8, das die folgenden Schritte umfasst:
- Formen von ersten Streifen, die in einer Längsrichtung (D1) jeweils eine Wiederholung eines Musters umfassen, das aus einem halben ersten Hohlraum (61), einer ersten Wand (71) in einer ersten Ebene (P1), einem halben zweiten Hohlraum (81), einer zweiten Wand (91) in der ersten Ebene P1 und einem halben Durchgang (101) zwischen dem halben ersten Hohlraum (61) und dem halben zweiten Hohlraum (81) im Bereich der ersten Wand (71) gebildet ist,
- Formen von zweiten Streifen, die in der Längsrichtung (D1) jeweils eine Wiederholung eines Musters umfassen, das aus einem halben ersten Hohlraum (62), einer ersten Wand (72) in einer zweiten Ebene (P2), einem halben zweiten Hohlraum (82), einer zweiten Wand (92) in der zweiten Ebene (P2) gebildet ist, und wobei ein halber Durchgang (102) zwischen dem halben ersten Hohlraum (62) und dem halben zweiten Hohlraum (82) im Bereich der ersten Wand (72) gebildet ist;
- Bilden von Strukturen (11) durch das Aneinanderfügen eines ersten Streifens (4) und eines zweiten Längsstreifens (5) in einer Querrichtung (D2);
- Aneinanderfügen mehrerer Strukturen (11) gemäß der Querrichtung (D2).

## Claims

1. Soundproofing coating comprising a cellular structure formed in a thickness of the coating between an open first face (1), permeable to acoustic waves, and a closed second face (3) formed by a closure sheet,
**characterized in that** the cellular structure is made up by joining, in a so-called transverse direction (D2), several structures (11), each of said structures (11) being formed by joining, in the transverse direction (D2), a first longitudinal strip (4) of a first geometry with a second longitudinal strip (5) of a second geometry,
the first strip (4) and the second strip (5) forming a structure (11) being configured so that each structure (11) exhibits successively and repeating in the longitudinal direction (D1):
- a first cavity (6) extending between the first face (1) and the second face (3) and open at the first face (1) and of which the cross section narrows progressively between the first face (1) and the second face (3) until said first cavity (6) becomes closed,
- a first joining of two walls (71, 72) belonging respectively to the first strip (4) and to the second strip (5) in contact with one another over part of the thickness of the coating so that a passage (10) is created between the first cavity (6) and a second cavity (8),
- said second cavity (8), which has a cross section that increases progressively between the first face (1) and the second face (3) and which is closed at the first face (1) and at the second face (3) of the coating by the closure sheet,
- a second joining of two walls (91, 92) belonging respectively to the first strip (4) and to the second strip (5) in contact with one another over all or part of the thickness of the coating.

2. Soundproofing coating according to Claim 1 wherein, in each structure (11), the first strip (4) and the second strip (5) are symmetrical along a longitudinal plane.

3. Soundproofing coating according to Claim 1 or Claim 2, wherein the passage (10) between the first cavity (6) and the second cavity (8) is formed near the second face (3) of the coating.

4. Soundproofing coating according to one of the preceding claims, wherein the joining of the structures (11) is performed in a staggered configuration, each first cavity (4) of one structure (11) being adjacent, in the transverse direction (D2), to two second cavities (8) of neighboring structures (11), and each second cavity (8) of one structure (11) being adjacent, in the transverse direction (D2), to two first cavities (4) of neighboring structures (11).

5. Soundproofing coating according to Claim 4, wherein an intermediate cavity (12), open at the first face (1), is formed longitudinally between each first cavity (6) of two transversely adjacent structures (11) .

6. Soundproofing coating according to Claim 5, wherein each first cavity (6) has a hexagonal open cross section at the first face (1), and each intermediate cavity (12) has a parallelogram-shaped cross section at the first face (1).

7. Soundproofing coating according to Claim 5 or Claim 6, wherein a drain (14) is formed, near the second face (3), between two longitudinally successive intermediate cavities (12).

8. Soundproofing coating according to one of the preceding claims, wherein there are formed:
- for each first cavity, a passage (10) between the second cavity (8) and each of the first cavities (6) longitudinally closest to said second cavity (8), thus placing said first cavities (6) in communication via said second cavity (8), near the second face (4) of the coating;
- for each second cavity (8), a duct (13) of cross section equal to or smaller than that of the passage (10) connecting said second cavity (8) to at least one neighboring first cavity (6), near the first face (1) of the coating.

9. Aircraft propulsion unit comprising a nacelle (17) and an engine (15), wherein an internal surface of the nacelle (17) and/or an external surface of a casing of the engine (15) has a soundproofing coating (18) according to one of Claims 1 to 8.

10. Method for manufacturing a soundproofing coating according to one of Claims 1 to 8, comprising the steps of:
- shaping first strips each comprising, in a longitudinal direction (D1), repeats of a pattern formed of a half first cavity (61), a first wall (71) in a first plane (P1), a half second cavity (81), a second wall (91) in the first plane (P1), and a half passage (101), between the half first cavity (61) and the half second cavity (81) at the first wall (71),
- shaping second strips each comprising, in the longitudinal direction (D1), repeats of a pattern formed of a half first cavity (62), a first wall (72) in a second plane (P2), a half second cavity (82), a second wall (92) in the second plane (P2), and a half passage (102) is formed between the half first cavity (62) and the half second cavity (82), at the first wall (72);
- forming structures (11) by joining, in a transverse direction (D2), a first strip (4) with a second longitudinal strip (5);
- joining several structures (11) in the transverse direction (D2) .
